# EUROPEAN PATENT SPECIFICATION

(11) **EP 1 953 735 B1**
(45) Date of publication and mention of the grant of the patent: **06.01.2010**
(21) Application number: 07002342.9
(22) Date of filing: 02.02.2007
(51) Int. Cl.: G10L 15/22, G10L 15/28

(54) **Voice control system and method for voice control**
System und Verfahren zur Sprachsteuerung
Système et procédé de contrôle vocal

(43) Date of publication of application: 06.08.2008
(73) Proprietor: Harman Becker Automotive Systems GmbH, 76307 Karlsbad (DE)
(72) Inventor: Buck, Markus, 88400 Biberach (DE); König, Lars, 89075 Ulm (DE); Schmidt, Gerhard, 89081 Ulm (DE)
(74) Representative: Grünecker, Kinkeldey, Stockmair & Schwanhäusser Anwaltssozietät

(56) References cited:
- WO-A-03/049003
- WO-A-2006/121896
- STANFORD V ET AL: "The nist smart space and meeting room projects: signals, acquisition, annotation, and metrics" IEEE INTERNATIONAL CONFERENCE ON ACOUSTICS, SPEECH, AND SIGNAL PROCESSING. PROCEEDINGS. (ICASSP), vol. 1, 6 April 2003 (2003-04-06), pages IV736-IV739, XP010641265 ISBN: 0-7803-7663-3
- GRIFFITHS L J ET AL: "AN ALTERNATIVE APPROACH TO LINEARLY CONSTRAINED ADAPTIVE BEAMFORMING" IEEE TRANSACTIONS ON ANTENNAS AND PROPAGATION, IEEE SERVICE CENTER, PISCATAWAY, NJ, US, vol. AP-30, no. 1, 1982, pages 27-34, XP000608836 ISSN: 0018-926X
- MUELLER S ET AL: "TRANSFER-FUNCTION MEASURMENT WITH SWEEPS" JOURNAL OF THE AUDIO ENGINEERING SOCIETY, AUDIO ENGINEERING SOCIETY, NEW YORK, NY, US, vol. 49, no. 6, June 2001 (2001-06), pages 443-471, XP001068219 ISSN: 1549-4950
- VIIKKI O: "ASR in portable wireless devices" AUTOMATIC SPEECH RECOGNITION AND UNDERSTANDING, 2001. ASRU '01. IEEE WORKSHOP ON 9-13 DEC. 2001, PISCATAWAY, NJ, USA,IEEE, 9 December 2001 (2001-12-09), pages 96-102, XP010603686 ISBN: 0-7803-7343-X

## Description

### Field of Invention

The present invention relates to a method for voice control and a voice control system. In particular, the present invention relates to a method for voice control of a voice control system comprising a stationary unit for recognizing a speech signal from a user.

### Background of the invention

Speech recognition systems, i.e. devices for converting an acoustic signal to a sequence of words or strings, become increasingly prevalent nowadays. In the last years, due to dramatic improvement in speech recognition technology, high performance speech analyzing, recognition algorithms and speech dialog systems have commonly been made available. Present day speech input capabilities comprise voice dialing, call routing, document preparation, etc. A speech dialog system can, e.g., be employed in a car to allow the user to control different devices such as a mobile phone, a car radio, a navigation system and/or an air condition.

In many applications reliability and comfort of voice control systems of the art are, however, not sufficiently satisfying. Present-day voice control systems are limited to the recognition of utterances of stationary speakers, e.g., passengers of vehicles, by a stationary microphone (array) or to the recognition of utterances of moving speakers by mobile devices comprising one or more microphones, e.g., headsets or cell phones. The process of speech recognition heavily depends on the quality of the detected speech signals. The quality of the speech signals deteriorates with increasing distance between the speaker and the microphone(s).

Stanford et al., in a paper entitled "The NIST Smart Space and Meeting Room Projects: Signals, Acquisition, Annotation, and Metrics", IEEE-ICASSP, vol. 1, pages IV-736 - IV-739, April 2003, disclose a smart meeting room and a multicomponent equipment for the identification and authentification of speakers that may carry smart locator badges or PDAs negotiating with the smart meeting room.

WO 2006/121896 A2 discloses a game environment comprising a computing system connected with an image-sound capture device including a sound capture unit. The sound capture unit is configured to include at least two microphones to select sound coming from particular directions and to filter out directions which are not central to the game play. In particular, voice commands can be captured by the sound capture unit as described in paragraph 59. According to an embodiment the image-sound capture device includes at least four microphones thereby enabling triangulation in order to localize sound sources.

A usual method to improve the signal quality in distant talking speech acquisition and the performance of speech recognition means is the utilization of multi-channel systems, i.e. microphone arrays, as described in "Microphone Arrays: Signal Processing Techniques and Applications", eds. Brandstein, M. and Ward, D., Springer, Berlin 2001.

Current multi-channel systems often make use of the so-called "General Sidelobe Canceller" (GSC), see, e.g., "An alternative approach to linearly constrained adaptive beamforming", by Griffiths, L.J. and Jim, C.W., IEEE Transactions on Antennas and Propagation, vol. 30., p.27, 1982. The GSC consists of two signal processing paths: a first (or lower) adaptive path with a blocking matrix and an adaptive noise cancelling means and a second (or upper) non-adaptive path with a fixed beamformer.

The fixed beamformer improves the signals pre-processed, e.g., by a means for time delay compensation using a fixed beam pattern. Adaptive processing methods are characterized by a permanent adaptation of processing parameters such as filter coefficients during operation of the system. The lower signal processing path of the GSC is optimized to generate noise reference signals used to subtract the residual noise of the output signal of the fixed beamformer.

However, the performance of beamforming devices depends on information of the speaker's position or a predetermined preferential direction for detection of a wanted signal. In the case of moving speakers and a usually rather complex impulse response of closed rooms, the estimation of the direction of a source of a wanted signal is rather, difficult.

Moreover, the localization of a speaker has to be performed very quickly, because the detected speech signal itself is usually used for the localization of the moving speaker. In addition, a speaker can only be localized when he is actually speaking. Fast signal processing is, thus, necessary for reliable speech recognition. However, even with the engineering process in recent years such a signal processing is still error prone and expensive.

A related problem is that a voice control system usually has to be activated haptically, e.g., by means of a push-to-talk button, which is considered uncomfortable by many users and also results in some lack of reaction of a system that shall be operated by voice. Another related problem is the priorization of a particular speaker. Voice control shall be offered in an individual manner such that a particular user may operate a voice control system according to his needs and preferences which demands for an identification of a particular speaker. Such a customization of voice control is desirable in order to improve the reliability of voice control systems and to improve customer's acceptance.

### Description of the Invention

In view of the above-mentioned problems the present invention provides a method for voice control of a voice control system comprising a stationary unit for receiving and recognizing a speech signal from at least one user of the voice control system according to claim 1.

According to the invention usage of a voice control system is facilitated and improved by a mobile device carried by the user. The mobile device communicates with the stationary unit by transmitting a control signal and an additional audio signal). Communication may be performed by transmitting an infrared signal and/or a radio signal and/or an optical signal and/or an acoustic signal (within or without the audible range) as the control signal. More than one user each carrying his own mobile device may operate the voice control system.

The mobile device can be, e.g., a cell phone or a smartphone (comprising a touch screen and a keyboard as well as a programmable logic) or a Personal Digital Assistant or a remote control or a headset or a hearing aid, in particular, a binaural hearing aid. Thus, a mobile device that is carried anyway by a user can be used for establishing communication with the stationary unit of the voice control system. In a very simple case, for example, a user carries a binaural hearing aid. Radio signals are transmitted between the left and the right pieces of the hearing aid in order to improve the performance of the hearing aid. These signals can be received by the stationary unit of a voice control system that can, thus, determine that the user is present in the room and operate correspondingly (e.g., by activating or adapting a speech recognition means). More elaborate examples are given below.

The voice control system may be any system controlled by verbal command of a user, e.g., a HIFI audio device or a television or another electronic communication or entertainment device. The stationary unit may be localized in a housing of the device operation of which is to be controlled by voice. The stationary unit may also be positioned apart from the actual device that is to be operated in response to a verbal command of a user. However, the stationary unit is fixed in a room, e.g., a living room or an office.

The stationary unit for receiving and recognizing a speech signal operates in response to a control signal transmitted by the at least one mobile device. Thereby, the stationary unit realizes the presence of a user and controls microphones being part of the stationary unit in response to the received control signal.

Possible operation of the stationary unit in response to the received control signal comprises activating the stationary unit and/or recognizing a speech signal and/or identifying the at least one user of the voice control system. Activation of the stationary unit may, in particular, include activation of a speech recognition means being part of the stationary unit.

If a user carrying the mobile device enters the room in which the stationary unit is installed the stationary unit can receive a control signal transmitted, e.g., periodically or on demand by the user, and, thereby, be informed of the presence of the user. Then, speech recognition can be activated and the very first utterance of the user can be reliably detected and recognized. If the control signal is transmitted by the user on demand, an unintended response of the voice control system can be avoided (e.g., due to a conversation of the user with another person present in the same room).

Each of the at least one mobile devices may send an individual control signal different from the control signals sent by other mobile devices thereby allowing the stationary unit to identify a particular user (strictly speaking a particular mobile device). Speech recognition for voice control can, thus, be performed by the stationary unit in dependence on the identified user. For example, the language of vocabulary lists used for the speech recognition process or individually trained code books can appropriately be used for speech recognition of utterances of identified users. Thus, the reliability of recognition results for utterances by the user that are detected by a microphone array of the stationary unit can be improved.

Moreover, since the user is localized a microphone array being part of the stationary unit is adjusted in accordance with the position/direction of the user. When operation of the stationary unit includes aiming the microphones of the microphone array at the position of the user of the voice control system, the signal-to-noise ratio (SNR) of the detected speech signal is enhanced. Signal processing can include beamforming (see above) of the individual microphone signals obtained by the microphone array to achieve a speech signal of high quality that can reliably be recognized for successful operation of the voice control system.

A periodic transmission of the control signal from the mobile device to the stationary unit allows for a position tracking of the user. Adaptation of parameters for speech recognition and adjustment of the microphone array can dynamically be performed on the basis of the actual localization of the user over a period of time.

In addition to the above-described advantages the mobile device also is used for analyzing the acoustic characteristics of the room in which the stationary unit is installed. The mobile device sends a pre-selected audio signal which is known before-hand by the stationary unit, i.e. parameters of the additional audio signal, as, e.g., the frequency, the short-time spectrum, the power density etc., are stored in the stationary unit and are compared with the detected additional audio signal. Based on the comparison the reverberation characteristics of the room and the impulse response of the loudspeaker-room-microphone system (the loudspeaker of this system being the loudspeaker of the mobile device that transmits the additional audio signal and the microphone of this system being the microphone(s) of the stationary unit) can be estimated.

Based on the analyzed acoustic characteristics of the room in which the stationary unit is installed and in which the voice control system is operated by the user processing parameters used for the speech recognition of the user's utterance are adapted. For example, noise reduction and echo compensation filtering means used to enhance the quality of the detected speech signal can be adapted accordingly.

Furthermore, the above described examples of the herein disclosed method may further comprise the additional steps of
detecting by the mobile device (e.g. by a cell phone) a speech signal from the user;
transmitting the detected speech signal from the mobile device to the stationary unit;
receiving the transmitted speech signal by the stationary unit;
processing the received speech signal for speech recognition to obtain a recognition result; and
operating the stationary unit on the basis of the recognition result.

According to this embodiment the mobile device is not only used to transmit the above-mentioned control signal and additional audio signal but also to transmit speech signals comprising the user's commands for operation of the voice control system. Since the microphone of the mobile device used for detection of the user's utterance is relatively close to the mouth of the user it might be preferred to use the speech signal transmitted from the mobile device rather than a speech signal detected by the stationary unit (and affected by the acoustic transfer of the room) in a noisy environment.

It is noted that in this embodiment the recognition of the speech signal representing the user's utterance is not necessarily performed exclusively on the basis of the speech signal transmitted from the mobile device to the stationary unit. Given a relatively poor sampling rate of present-days cell phones only non-sibilant portions of the speech signal transmitted form the mobile device to the stationary unit might be used for the speech recognition process whereas sibilant portions of a speech signal (representing the same utterance of the user) that is detected by a microphone array of the stationary unit may be used for the speech recognition process.

According to another example the method comprises the additional steps of
detecting by the mobile device (e.g., by a cell phone) a speech signal from the user;
recognizing the detected speech signal by the mobile device to obtain a recognition result;
and, furthermore,
the control signal that is transmitted from the at least one mobile device to the stationary unit is generated on the basis of the recognition result.

This embodiment makes use of a recognizer installed in the mobile device. Some recent cell phones or PDAs exhibit the function of speech recognition of a speech input, in particular, in the form of a keyword or keyphrase. The mobile device may recognize a keyword or keyphrase (e.g., "start ...", "stop", "louder") and transmit an appropriate control signal to the stationary unit. Such a signal can be given priority over a speech signal detected and recognized by the stationary unit, i.e. if the voice control system does not operate according to the user's intentions he can directly interact with the voice control system via the control signal generated on the basis of the recognition result obtained by a recognizer installed in the mobile device. Thereby, flexibility and reliability are further enhanced.

The present invention also provides a voice control system according to claim 9.

The stationary unit of the voice control system is configured to be activated in response to the received control signal and further comprises a processing unit configured to localize the mobile device in response to the received control signal.

The stationary unit comprises a microphone array comprising microphones, in particular, at least one directional microphone, and the stationary unit is configured to adjust the microphone array in response to the received control signal. In particular, the microphones of the microphone array can be aimed at the position of the user/speaker in response to the received control signal.

The at least one mobile device can, in particular, be configured to transmit an infrared signal and/or a radio signal and/or an optical signal and/or an acoustic signal as the control signal and the stationary unit can be configured to receive the transmitted infrared signal and/or radio signal and/or optical signal and/or acoustic signal by an appropriate receiver.

The at least one mobile device of the inventive voice control system can, e.g., be a cell phone or a smartphone or a Personal Digital Assistant or a remote control or a telephony headset or a hearing aid, in particular, a binaural hearing aid.

According to an example, the at least one mobile device is a cell phone or a smartphone or a Personal Digital Assistant that is also configured to detect a speech signal from the user (by means of one or more microphones incorporated in the mobile device) and to transmit the detected speech signal to the stationary unit and the stationary unit is configured to recognize the speech signal transmitted by the mobile device to obtain a recognition result and to operate in response to the received control signal.

According to another example, the at least one mobile device is a cell phone or a smartphone or a Personal Digital Assistant that is also configured to detect a speech signal from the user, to recognize the detected speech signal to obtain a recognition result and to generate the control signal based on the recognition result. Of course, the features of the two lastly mentioned examples can be combined with each other in order to further enhance the variability of the control of the voice control system by the user.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 illustrates an example of the voice control system according to the present invention wherein the voice control system comprises a stationary unit and mobile devices carried by users of the voice control system.

Figure 2 illustrates steps of an example of the method for voice control according to the present invention comprising transmitting a signal from a mobile device to a stationary unit of a voice control system.

Figure 3 illustrates steps of an example of the method for voice control according to the present invention comprising transmitting an audio signal from a mobile device to a stationary unit of a voice control system to estimate the acoustic characteristics of the room.

Figure 4 illustrates steps of an example of the method for voice control according to the present invention comprising transmitting an audio signal, in particular, a speech signal from a cell phone to a stationary unit.

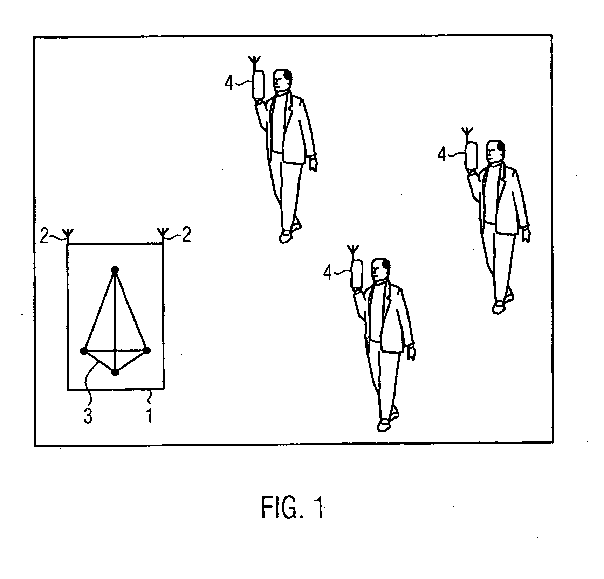

Figure 1 illustrates an example of the herein disclosed voice control system comprising a stationary unit 1 that is installed in a room, e.g., in a living room or office. The stationary unit 1 may be part of a HIFI audio system and it is equipped with a radio receiver 2. The radio receiver 2 may be a Bluetooth receiver. Multiple antenna 2 are installed for Bluetooth mediated locating, i.e. determining a position of a person via Bluetooth signals. The stationary unit 1 also comprises a microphone array 3 for detecting speech signals. The detected speech signals are recognized by a speech recognition means being part of the stationary unit 1.

Bluetooth represents a short-distance (≤ 10 m) wireless communication technique that becomes increasingly prevalent. Bluetooth is relatively low in both cost and power consumption, which make it very suitable for mobile devices. The Bluetooth technology makes use of the ISM band (2,402 - 2,480 GHz) that is globally available and license-free. The employed fast frequency hopping method with 1600 frequency changes per second guarantees a relatively high interference resistance. Of course, radio communication is not restricted to a Bluetooth connection. The Wireless Local Area Network (WLAN), e.g., provides one alternative radio link.

A number of persons (users of the stationary unit 1) is present in the room. Each user is carrying a mobile device 4 that is configured to transmit a radio signal to the receiver 2 of the stationary unit. The mobile devices 4 carried by the users are part of the voice control system and may be different ones, e.g., cell phones, PDAs or hearing aids. The mobile devices 4 may periodically transmit signals that are received by the receiver 2. Furthermore, the mobile devices 4 may be provided with a programmable logic offering some flexibility in operation, in particular, communication with the stationary unit 1.

In the case of a binaural hearing aid, radio signals are transmitted anyway between the left and right part of the binaural hearing aids. The receiver 2 of the stationary unit 1 may be adapted to receive and identify such signals in order to allow the stationary unit to determine that a user with such a binaural hearing aid is actually in the room. Of course, such a binaural hearing aid may be provided with an additional transmitter to transmit a control signal to the stationary unit 1.

It is noted that in the above example as well as in the following ones communication between the mobile devices 4 and the stationary unit 1 is not restricted to the transmission of radio signals. Infrared data transmission can be used according to another embodiment of the present invention. In this case, the standards of the Infrared Data Association IrDa 1.0, providing a transfer rate up to 115 kBit/s, or the IrDa 1.1, providing a transfer rate up to 4 MBit/s, may preferably used. High-frequency acoustic signals (say above 20 kHz) or UV signals may also be used.

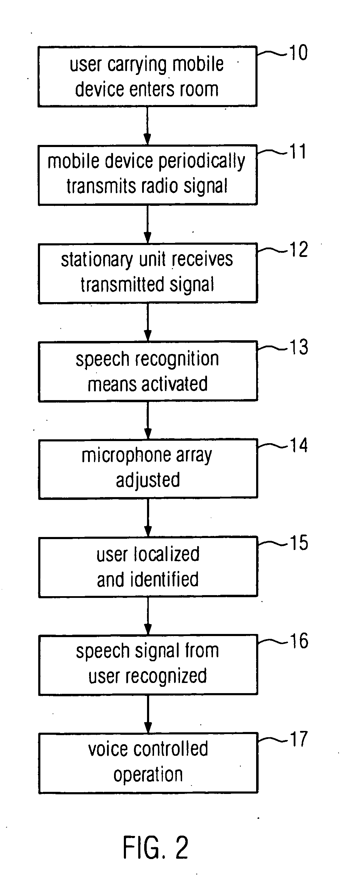

For a specific example the operation of the devices shown in Figure 1 is illustrated with reference to Figure 2. When a person carrying a mobile device 4 enters the room 10, the receiver 2 of the stationary unit 1 can receive 12 a signal periodically transmitted 11 from the mobile device 4 carried by the user and thereby the stationary unit 1 can be activated for speech recognition 13. Alternatively, the user might manually operate the mobile device 4 (e.g., by means of a button) to initiate transmitting of a signal to the receiver 2 of the stationary unit 1.

The microphone array 3 can be adjusted according to the determined position/direction of the person 14 in order to beamform microphone signals obtained by detecting a speech signal from the person by multiple microphones of the microphone array 3. The position of the person and, thus, the direction from the microphone array to the person can be determined 15. Since the signal-to-noise ratio (SNR) of a beamformed microphone signal usually exceeds the SNR of non-beamformed microphone signals speech recognition by the speech recognition means of the stationary unit becomes more reliable.

Moreover, according to the present example, the mobile devices 4 transmit different signals to the receiver 2, e.g. differently modulated radio signals or radio signal of different frequencies. Thus, the individual users can be identified 15 by the stationary unit 1. Identification of the users/speakers is helpful in speech recognition, in particular, in the case of a speech recognition means adapted for speaker enrollment. Speech signals from the user a recognized and subsequently voice controlled operation can be performed on the basis of the recognition result 17. If individual users are identified priorization of these users can readily be installed. Thus, e.g., a verbal command given by one of several users being present in the room can overrule another command given before or simultaneously by another speaker. Furthermore, the stationary unit 1 may be adapted to control adjustment of the microphone array 3 with preferences to particular identified users/speakers.

The mobile device 4 may also comprise a movement sensor, e.g. in form of an acceleration sensor. Only when movement of the mobile device 4 is detected by such a movement sensor a localization signal is transmitted to the receiver 2 of the stationary unit 1 thereby saving electric power as compared to the case of a periodically transmitted signal. In response to the thus transmitted localization signal that is, e.g. a radio signal or a high-frequency signal that is not audible for a user, the speech recognition means being part of the stationary unit may be activated and/or the microphones of the microphone array 3 are aimed at the actual position of the user.

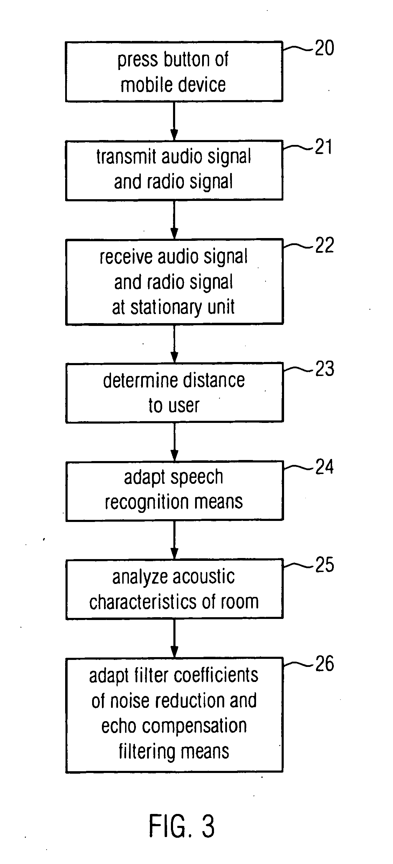

In another example (see Figure 3) the system shown in Figure 1 works as follows. The mobile device 4 is configured to transmit an audio signal within the audible frequency range. A user presses 20 a button of the mobile device 4 and in response to the manual operation of the button an audio signal as well as a radio signal are transmitted 21 from the mobile device 4. The transmitted audio and radio signals are received 22 by the stationary unit 1. In particular, the audio signal is detected by the microphone array 3 and the radio signal is detected by the receiver 2 shown in Figure 1. Upon receipt of the audio signal or the radio signal a speech recognition means in the stationary unit 1 is activated and the microphones of a microphone array are aimed at the position of the mobile device 4 that has transmitted the audio signal.

The stationary unit 1 can determine 23 the distance to the user carrying the mobile device 4 by determining the difference of the transit time of the simultaneously transmitted audio and radio signals. A speech recognition means in the stationary unit 1 is subsequently adapted 24 in accordance with the determined distance, e.g. parameters for the signal processing are adjusted. Beamforming and signal filtering may be controlled and adapted based on the determined distance and direction from which the audio and radio signals are detected.

The audio signal transmitted by the mobile device 4 is known a priori. The audio signal may, in particular, represent a jingle that indicates the user that voice control is activated. The signal characteristics (as, e.g., the frequency, the short-time power density, etc.) are stored in the stationary unit 1 and compared with the detected and processed audio signal transmitted by the mobile device 4 for analysis of the acoustic characteristics of the room 25. The reverberation characteristics of the room can be estimated.

Noise reduction filters and echo compensation filtering means used to enhance the quality of speech signals of a user before a recognition process can be adapted 26 on the basis of an estimate of the impulse response of loudspeaker-room-microphone system (the loudspeaker of this system being the loudspeaker of the mobile device) obtained by an analysis of the audio signal transmitted by the mobile device 4. The reliability of speech recognition of utterances of the user after adaptation of the above filtering means based on the estimated acoustic characteristics of the room can be improved significantly.

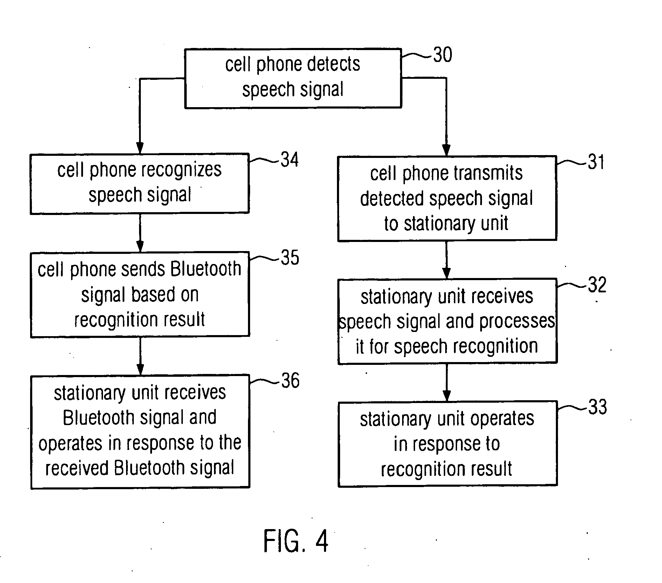

Figure 4 illustrates an example of the operation of the system shown in Figure 1 for the case in which a user carries a cell phone. The cell phone detects a speech signal from the user 30. The cell phone transmits 31 the detected speech signal to the stationary unit that receives this signal and processes 32 it for speech recognition by a speech recognition means. In response to the recognition result the stationary unit 1 performs some operation 33. In a simple example, the user utters the keyword "Louder" and in response to the recognition of this utterance the stationary unit increases the volume of a HIFI audio systems operated by voice control.

However, according to another example only some portion of a speech signal transmitted from the cell phone to the stationary unit 1 is used for speech recognition in the stationary unit 1. Since the sampling rate of standard cell phones is about 8 kHz speech recognition of sibilants transmitted to the stationary unit might be not sufficiently reliable. Thus, it might be preferred that sibilant portions of the speech signal that is also detected by the microphone array 3 are recognized by a speech recognition means in the stationary unit 1. On the other hand, the speech signal detected and transmitted by the cell phone can be used for speaker localization and identification. As described above the microphone array 3 as well as processing parameters used for speech recognition can be adapted in accordance with the speaker localization and identification.

Alternatively to the above-described operation the cell phone may itself recognize 34 the detected speech signal, in particular, a keyword. In this example, the cell phone transmits 35 a Bluetooth signal to the stationary unit 1 in response to the recognized speech signal. The stationary unit 1 receives 36 the Bluetooth signal and operates in response to the received Bluetooth signal. For example, the user may utter the key sentence "Voice control on" which is recognized by a recognizer installed in the cell phone. A corresponding Bluetooth signal is sent to the stationary unit 1 that activates a speech recognition means being part of the stationary unit 1.

All previously discussed embodiments are not intended as limitations but serve as examples illustrating features and advantages of the invention. It is to be understood that some or all of the above described features can also be combined in different ways.

## Claims

1. Method for voice control of a voice control system comprising a stationary unit for receiving and recognizing a speech signal from at least one user of the voice control system, comprising
providing at least one mobile device carried by the at least one user of the voice control system;
transmitting a control signal from the at least one mobile device to the stationary unit;
receiving the transmitted control signal by the stationary unit; and
operating the stationary unit in response to the received control signal;
wherein operating the stationary unit comprises localizing the at least one user of the voice control system and adjusting microphones of a microphone array being part of the stationary unit based on the localization of the at least one user;
**characterized by**
storing parameters of an additional audio signal in the stationary unit;
transmitting the additional audio signal from the mobile device to the stationary unit;
receiving the additional audio signal by the stationary unit; and
analyzing the acoustic characteristics of a room in which the stationary unit is installed on the basis of the received additional audio signal and the stored parameters of the additional audio signal; and
adapting processing parameters used for recognizing the speech signal based on the analyzed acoustic characteristics of the room.

2. The method according to claim 1, wherein operating the stationary unit comprises activating the stationary unit and/or recognizing a speech signal and/or identifying the at least one user of the voice control system.

3. The method according to claim 2, wherein a speech signal from the at least one user is recognized based on identification of the at least one user.

4. The method according to one of the preceding claims, wherein the control signal is transmitted periodically or on demand by the at least one user.

5. The method according to one of the preceding claims, wherein the transmitted and received control signal is an infrared signal and/or a radio signal and/or an optical signal and/or an acoustic signal.

6. The method according to one of the preceding claims, wherein the control signal is transmitted by a cell phone or a smartphone or a Personal Digital Assistant or a remote control or a headset or a hearing aid, in particular, a binaural hearing aid.

7. The method according to one of the preceding claims, comprising the additional steps of
detecting by the mobile device a speech signal from the at least one user;
transmitting the detected speech signal from the mobile device to the stationary unit;
receiving the transmitted speech signal by the stationary unit;
processing the received speech signal for speech recognition to obtain a recognition result; and
operating the stationary unit on the basis of the recognition result.

8. The method according to one of the claims 1-6, comprising the additional steps of
detecting by the mobile device a speech signal from the at least one user;
recognizing the detected speech signal by the mobile device to obtain a recognition result;
and wherein
the control signal that is transmitted from the at least one mobile device to the stationary unit is generated on the basis of the recognition result.

9. Voice control system, comprising
a stationary unit configured to receive a speech signal and to store parameters of an additional audio signal;
at least one mobile device configured to transmit a control signal and the additional audio signal to the stationary unit; and
wherein the stationary unit is also configured to receive the control signal and the additional audio signal transmitted by the at least one mobile device and to operate in response to the received control signal; wherein
the stationary unit further comprises
A) a processing unit configured to a) localize the mobile device in response to the received control signal; and b) analyze the acoustic characteristics of a room in which the stationary unit is installed on the basis of the received additional audio signal and the stored parameters of the additional audio signal; and c) adapt processing parameters used for recognizing the speech signal based on the analyzed acoustic characteristics of the room; and
B) a microphone array comprising microphones, in particular, at least one directional microphone;
and wherein the stationary unit is configured to adjust the microphone array in response to the localization of the mobile device.

10. The voice control system according to claim 9, wherein the stationary unit is configured to be activated in response to the received control signal and further comprising a processing unit configured to recognize a speech signal and/or identify the mobile device in response to the received control signal.

11. The voice control system according to claim 9 or 10, wherein the at least one mobile device is configured to transmit an infrared signal and/or a radio signal and/or an optical signal and/or an acoustic signal as the control signal and wherein the stationary unit is configured to receive the transmitted infrared signal and/or radio signal and/or optical signal and/or acoustic signal.

12. The voice control system according to one of the claims 9 to 11, wherein the at least one mobile device is a cell phone or a smartphone or a Personal Digital Assistant or a remote control or a headset or a hearing aid, in particular, a binaural hearing aid.

13. The voice control system according to one of the claims 9 to 12, wherein
the at least one mobile device is a cell phone or a smartphone or a Personal Digital Assistant that is also configured to detect a speech signal from the at least one user and to transmit the detected speech signal to the stationary unit; and wherein
the stationary unit is configured to recognize the speech signal transmitted by the mobile device to obtain a recognition result and to operate in response to the received control signal.

14. The voice control system according to one of the claims 9 to 13, wherein the at least one mobile device is a cell phone or a smartphone or a Personal Digital Assistant that is configured to detect a speech signal from the at least one user, to recognize the detected speech signal to obtain a recognition result and to generate the control signal based on the recognition result.

## Patentansprüche

1. Verfahren zur Sprachsteuerung eines Sprachsteuerungssystems, das eine stationäre Einheit zum Empfangen und Erkennen eines Sprachsignals von zumindest einem Nutzer des Sprachsteuerungssystems umfasst, umfassend
Bereitstellen zumindest einer mobilen Einrichtung, die von dem zumindest einen Nutzer des Sprachsteuerungssystems getragen wird;
Senden eines Steuersignals von der zumindest einen mobilen Einrichtung zu der stationären Einheit;
Empfangen des gesendeten Steuersignals durch die stationäre Einheit; und
Betreiben der stationären Einheit in Reaktion auf das empfangene Steuersignal;
wobei das Betreiben der stationären Einheit das Lokalisieren des zumindest einen Nutzers des Sprachsteuerungssystems und Einstellen von Mikrofonen einer Mikrofonanordnung, die Teil der stationären Einheit ist, auf der Grundlage der Lokalisierung des zumindest einen Nutzers umfasst;
**gekennzeichnet durch**
Speichern von Parametern eines zusätzlichen Audiosignals in der stationären Einheit;
Senden des zusätzlichen Audiosignals von der mobilen Einheit zu der stationären Einheit;
Empfangen des zusätzlichen Audiosignals **durch** die stationäre Einheit; und
Analysieren der akustischen Eigenschaften eines Raumes, in dem die stationäre Einheit installiert ist, auf der Grundlage des empfangenen zusätzlichen Audiosignals und der gespeicherten Parameter des zusätzlichen Audiosignals; und
Einstellen von Verarbeitungsparametern, die zum Erkennen des Sprachsignals verwendet werden, auf der Grundlage der analysierten akustischen Eigenschaften des Raumes.

2. Das Verfahren gemäß Anspruch 1, in dem das Betreiben der stationären Einheit das Aktivieren der stationären Einheit und/oder Erkennen eines Sprachsignals und/oder Identifizieren des zumindest einen Nutzers des Sprachsteuerungssystems umfasst.

3. Das Verfahren gemäß Anspruch 2, in dem ein Sprachsignal von dem zumindest einen Nutzer auf der Grundlage der Identifizierung des zumindest einen Nutzers erkannt wird.

4. Das Verfahren gemäß einem der vorhergehenden Ansprüche, in dem das Steuersignal periodisch oder auf Befehl von dem zumindest einen Nutzer gesendet wird.

5. Das Verfahren gemäß einem der vorhergehenden Ansprüche, in dem das gesendete und empfangene Steuersignal ein Infrarotsignal und/oder ein Funksignal und/oder ein optisches Signal und/oder ein akustisches Signal ist.

6. Das Verfahren gemäß einem der vorhergehenden Ansprüche, in dem das Steuersignal von einem Mobiltelefon oder einem Smartphone oder einem Personal Digital Assistant oder einer Fernbedienung oder einem Headset oder einem Hörgerät, insbesondere einem binauralen Hörgerät, gesendet wird.

7. Das Verfahren gemäß einem der vorhergehenden Ansprüche, das die zusätzlichen Schritte umfasst
Detektieren von einem Sprachsignal von dem zumindest einen Nutzer durch die mobile Einrichtung;
Senden des detektierten Sprachsignals von der mobilen Einrichtung zu der stationären Einheit;
Empfangen des gesendeten Sprachsignals durch die stationäre Einheit;
Verarbeiten des empfangenen Sprachsignals zur Spracherkennung, um ein Erkennergebnis zu erhalten; und
Betreiben der stationären Einheit auf der Grundlage des Erkennergebnisses.

8. Das Verfahren gemäß einem der Ansprüche 1 - 6, das die zusätzlichen Schritte umfasst
Detektieren von einem Sprachsignal von dem zumindest einen Nutzer durch die mobile Einrichtung;
Erkennen des detektierten Sprachsignals durch die mobile Einrichtung, um ein Erkennergebnis zu erhalten;
und wobei
das Steuersignal, das von der zumindest einen mobilen Einrichtung zu der stationären Einrichtung gesendet wird, auf der Grundlage des Erkennergebnisses erzeugt wird.

9. Sprachsteuerungssystem, das umfasst
eine stationäre Einheit, die dazu ausgebildet ist, ein Sprachsignal zu empfangen und Parameter eines zusätzlichen Audiosignals zu speichern;
zumindest eine mobile Einrichtung, die dazu ausgebildet ist, ein Steuersignal und das zusätzliche Audiosignal an die stationäre Einheit zu senden; und
in dem die stationäre Einheit auch dazu ausgebildet ist, das Steuersignal und das zusätzliche Audiosignal, die von der zumindest einen mobilen Einrichtung gesendet werden, zu empfangen und in Reaktion auf das empfangene Steuersignal zu arbeiten; wobei
die stationäre Einheit weiterhin umfasst
A) eine Verarb eitungseinheit, die dazu ausgebildet ist, a) die mobile Einrichtung in Reaktion auf das empfangene Steuersignal zu lokalisieren; und b) die akustischen Eigenschaften eines Raumes, in dem die stationäre Einheit installiert ist, auf der Grundlage des empfangenen zusätzlichen Audiosignals und der gespeicherten Parameter des zusätzlichen Audiosignals zu analysieren und b) Verarbeitungsparameter, die zum Erkennen des Sprachsignals verwendet werden, auf der Grundlage der analysierten akustischen Eigenschaften des Raumes einzustellen; und
B) eine Mikrofonanordnung, die Mikrofone, insbesondere zumindest ein Richtmikrofon, umfasst;
und wobei die stationäre Einheit dazu ausgebildet ist, die Mikrofonanordnung in Reaktion auf die Lokalisierung der mobilen Einrichtung einzustellen.

10. Das Sprachsteuerungssystem gemäß Anspruch 9, in dem die stationäre Einheit dazu ausgebildet ist, in Reaktion auf das empfangene Steuersignal aktiviert zu werden, und weiterhin eine Verarbeitungseinheit umfassend, die dazu ausgebildet ist, ein Sprachsignal zu erkennen und/oder die mobile Einrichtung in Reaktion auf das empfangene Steuersignal zu identifizieren.

11. Das Sprachsteuerungssystem gemäß Anspruch 9 oder 10, in dem die zumindest eine mobile Einrichtung dazu ausgebildet ist, ein Infrarotsignal und/oder ein Funksignal und/oder ein optisches Signal und/oder ein akustisches Signal als das Steuersignal zu senden, und in dem die stationäre Einheit dazu ausgebildet ist, das gesendete Infrarotsignal und/oder Funksignal und/oder optische Signal und/oder akustische Signal zu empfangen.

12. Das Sprachsteuerungssystem gemäß einem der Ansprüche 9 bis 11, in dem die zumindest eine mobile Einrichtung ein Mobiltelefon oder ein Smartphone oder ein Personal Digital Assistant oder eine Fernbedienung oder ein Headset oder ein Hörgerät, insbesondere ein binaurales Hörgerät, ist.

13. Das Sprachsteuerungssystem gemäß einem der Ansprüche 9 bis 12, in dem die zumindest eine mobile Einrichtung ein Mobiltelefon oder ein Smartphone oder ein Personal Digital Assistant ist, das oder der zudem dazu ausgebildet ist, ein Sprachsignal von dem zumindest einen Nutzer zu detektieren und das detektierte Sprachsignal zu der stationären Einheit zu senden; und in dem
die stationäre Einheit dazu ausgebildet ist, das Sprachsignal, das von der mobilen Einrichtung gesendet wird, zu erkennen, um ein Erkennergebnis zu erhalten und in Reaktion auf das empfangene Steuersignal zu arbeiten.

14. Das Sprachsteuerungssystem gemäß einem der Ansprüche 9 bis 13, in dem die zumindest eine mobile Einrichtung ein Mobiltelefon oder ein Smartphone oder ein Personal Digital Assistant ist, das oder der dazu ausgebildet ist, ein Sprachsignal von dem zumindest einen Nutzer zu detektieren, das detektierte Sprachsignal zu erkennen, um ein Erkennergebnis zu erhalten, und das Steuersignal auf der Grundlage des Erkennergebnisses zu erzeugen.

## Revendications

1. Procédé de contrôle vocal d'un système de contrôle vocal comportant une unité stationnaire pour recevoir et reconnaitre un signal de parole provenant d'au, moins un utilisateur du système de contrôle vocal, comprenant
la fourniture d'au moins un dispositif mobile transporté par l'au moins un utilisateur du système de contrôle vocal ;
la transmission d'un signal de contrôle provenant de l'au moins un dispositif mobile vers l'unité stationnaire ;
la réception par l'unité stationnaire du signal de contrôle transmis ; et
la commande de l'unité stationnaire en réponse au signal de contrôle reçu ;
dans lequel la commande de l'unité stationnaire comprend la localisation de l'au moins un utilisateur du système de contrôle vocal et le réglage de microphones d'un réseau de microphones appartenant à l'unité stationnaire sur base de la localisation de l'au moins un utilisateur ;
**caractérisé par**
l'enregistrement de paramètres d'un signal audio additionnel dans l'unité stationnaire ;
la transmission du signal audio additionnel provenant du dispositif mobile vers l'unité stationnaire ;
la réception du signal audio additionnel par l'unité stationnaire ; et
l'analyse des caractéristiques acoustiques d'une pièce dans laquelle l'unité stationnaire est installée sur base du signal audio additionnel reçu et des paramètres enregistrés du signal audio additionnel ; et
l'adaptation des paramètres de traitement utilisés pour la reconnaissance du signal de parole sur base des caractéristiques acoustiques de la pièce analysées.

2. Procédé selon la revendication 1, dans lequel la commande de l'unité stationnaire comprend l'activation de l'unité stationnaire et/ou la reconnaissance d'un signal de parole et/ou l'identification de l'au moins un utilisateur du système de contrôle vocal.

3. Procédé selon la revendication 2, dans lequel un signal de parole provenant de l'au moins un utilisateur est reconnu sur base de l'identification de l'au moins un utilisateur.

4. Procédé selon l'une des revendications précédentes, dans lequel le signal de contrôle est transmis périodiquement ou sur demande par l'au moins un utilisateur.

5. Procédé selon l'une des revendications précédentes, dans lequel le signal de contrôle transmis et reçu est un signal infrarouge et/ou un signal radio et/ou un signal optique et/ou un signal acoustique.

6. Procédé selon l'une des revendications précédentes, dans lequel le signal de contrôle est transmis par un téléphone mobile, un smartphone, un assistant numérique personnel, une télécommande, un casque à écouteurs ou un appareil auditif - en particulier un appareil auditif biauriculaire.

7. Procédé selon l'une des revendications précédentes, comprenant les étapes additionnelles de :
détection par le dispositif mobile d'un signal de parole provenant de l'au moins un utilisateur ;
transmission du signal de parole détecté provenant du dispositif mobile vers l'unité stationnaire ;
réception du signal de parole transmis par l'unité stationnaire ;
traitement du signal de parole reçu pour la reconnaissance de parole afin d'obtenir un résultat de reconnaissance ; et
commande de l'unité stationnaire sur base du résultat de reconnaissance.

8. Procédé selon l'une des revendications 1 à 6, comprenant les étapes additionnelles de :
détection par le dispositif mobile d'un signal de parole provenant de l'au moins un utilisateur ;
reconnaissance du signal de parole détecté par le dispositif mobile pour obtenir un résultat de reconnaissance ;
et dans lequel le signal de contrôle transmis provenant de l'au moins un dispositif mobile vers l'unité stationnaire est généré sur base du résultat de reconnaissance.

9. Système de contrôle vocal, comprenant
une unité stationnaire configurée pour recevoir un signal de parole et pour enregistrer des paramètres d'un signal audio additionnel ;
au moins un dispositif mobile configuré pour transmettre un signal de contrôle et le signal audio additionnel à l'unité stationnaire ; et
dans lequel l'unité stationnaire est également configurée pour recevoir le signal de contrôle et le signal audio additionnel transmis par l'au moins un dispositif mobile et pour commander en réponse au signal de contrôle reçu ; dans lequel
l'unité stationnaire comprend en outre
A) une unité de traitement configurée pour a) localiser le dispositif mobile en réponse au signal de contrôle reçu ; et b) analyser les caractéristiques acoustiques d'une pièce dans laquelle l'unité stationnaire est installée sur base du signal audio additionnel reçu et des paramètres enregistrés du signal audio additionnel ; et c) adapter des paramètres de traitement utilisés pour la reconnaissance du signal de parole sur base des caractéristiques acoustiques de la pièce analysées ; et
B) un réseau de microphones, comprenant en particulier au moins un microphone directionnel ;
et dans lequel
l'unité stationnaire est configurée pour régler le réseau de microphones en réponse à la localisation du dispositif mobile.

10. Système de contrôle vocal selon la revendication 9, dans lequel l'unité stationnaire est configurée pour être activée en réponse au signal de contrôle reçu et comprenant en outre une unité de traitement configurée pour reconnaître un signal de parole et/ou identifier le dispositif mobile en réponse au signal de contrôle reçu.

11. Système de contrôle vocal selon la revendication 9 ou 10, dans lequel l'au moins un dispositif mobile est configuré pour transmettre un signal infrarouge et/ou un signal radio et/ou un signal optique et/ou un signal acoustique comme signal de contrôle, et dans lequel l'unité stationnaire est configurée pour recevoir le signal infrarouge transmis et/ou le signal radio et/ou le signal optique et/ou le signal acoustique.

12. Système de contrôle vocal selon l'une des revendications 9 à 11, dans lequel l'au moins un dispositif mobile est un téléphone mobile, un smartphone, un assistant numérique personnel, une télécommande, un casque à écouteurs ou un appareil auditif - en particulier un appareil auditif biauriculaire.

13. Système de contrôle vocal selon l'une des revendications 9 à 12, dans lequel
l'au moins un dispositif mobile est un téléphone mobile, un smartphone ou un assistant numérique personnel, qui est également configuré pour détecter un signal de parole de l'au moins un utilisateur et pour transmettre le signal de parole détecté à l'unité stationnaire ; et dans lequel
l'unité stationnaire est configurée pour reconnaître le signal de parole transmis par le dispositif mobile pour obtenir un résultat de reconnaissance et pour commander en réponse au signal de contrôle reçu.

14. Système de contrôle vocal selon l'une des revendications 9 à 13, dans lequel l'au moins un dispositif mobile est un téléphone mobile, un smartphone ou un assistant numérique personnel configuré pour détecter un signal de parole de l'au moins un utilisateur, pour reconnaître le signal de parole détecté afin d'obtenir un résultat de reconnaissance et pour générer le signal de contrôle sur base du résultat de reconnaissance.
